# EUROPÄISCHE PATENTSCHRIFT

(11) **EP 1 291 648 B1**
(45) Veröffentlichungstag und Bekanntmachung des Hinweises auf die Patenterteilung: **03.02.2010**
(21) Anmeldenummer: 02018405.7
(22) Anmeldetag: 15.08.2002
(51) Int. Cl.: G01N 23/00, G01N 23/20

(54) **Platzsparendes Gehäuse für ein Röntgen-Analysegerät mit Probenwechsler**
Space-saving housing for an X-ray apparatus with sample changer
Boîtier à encombrement réduit pour un appareil à rayons x avec changeur d'échantillons

(30) Priorität: 07.09.2001 DE 10143991
(43) Veröffentlichungstag der Anmeldung: 12.03.2003
(73) Patentinhaber: Bruker AXS GmbH, 76187 Karlsruhe (DE)
(72) Erfinder: Greenbank, M.G.M., Irlam M/C (GB); Watts, A.M., Congleton, Cheshire (GB); Hardman, P.J., Heaton Moor, Stockport SK44E9 (GB); Mauser, Karl-Eugen, 76467 Bietigheim (DE)
(74) Vertreter: Kohler Schmid Möbus

(56) Entgegenhaltungen:
- WO-A2-01/11345
- DE-A- 3 512 459
- DE-C- 19 851 501
- US-A- 4 770 593
- US-A- 6 111 930

## Beschreibung

Die Erfindung betrifft ein Röntgen-Analysegerät zur Untersuchung von Material-Proben, mit einer Vorrichtung zum automatischen Wechseln der Proben, die einen Probentisch mit in m Zeilen angeordneten Ablege-Positionen enthält, wobei die Zeilen parallel zu einer x-Richtung verlaufen und m ≥ 2, und mit einer Greifvorrichtung zur gezielten Entnahme einer beliebigen Probe aus einer Ablege-Position und Zuführung in eine Übergabe- und/oder Mess-Position sowie zurück auf eine Ablege-Position, wobei die Greifvorrichtung parallel zur x-Richtung linear verfahrbar ist.

Eine solches Röntgen-Analysegerät ist beispielsweise bekannt aus der Firmendruckschrift "SPECTROMETRY SOLUTIONS; S4 EXPLORER" der Firma Bruker AXS Analytical X-Ray Systems GmbH aus dem Jahre 2001.

Die prinzipielle Funktionsweise einer gattungsgemäßen Anordnung ist darin ausführlich beschrieben. Derartige Röntgen-Analysegeräte eignen sich für schnelle, routinemäßige, zerstörungsfreie Analysen der unterschiedlichsten Materialproben in Laboren und Forschungseinrichtungen. Dabei können entweder Röntgen-Fluoreszenz-Methoden, aber auch Verfahren der Röntgen-Diffraktometrie oder andere Rönten-Analyse-Methoden zur Untersuchung der Materialproben eingesetzt werden. Die Materialproben können sowohl als Festkörper massiv oder in Pulverform, aber auch als Flüssigkeitsproben in entsprechenden Probengefäßen vorliegen.

Da die gattungsgemäßen Analyse-Geräte für routinemäßige Untersuchungen einer großen Anzahl von Proben in kurzen Zeiten vorgesehen sind, ist eine automatisch Wechselvorrichtung zum Transport der jeweils zu vermessenden Probe aus einer Vielzahl von zu untersuchenden Proben innerhalb des Gerätes unerlässlich. Bei den bekannten Geräten ist zur Aufnahme der Proben ein unbeweglich in der Apparatur befestigter Probentisch vorgesehen, wie er beispielsweise in dem oben zitierten Firmenprospekt mehrfach gezeigt ist. In diesem Probentisch sind Aufnahmeöffnungen zum Einsetzen der diversen Proben bzw. Probengefäßen in einer m × n - Matrix angeordnet vorgesehen. Diese werden von Hand nach einem vom Benutzer jeweils festzulegenden Schema mit den diversen Proben bestückt, bevor eine Messserie begonnen wird, die dann automatisiert ohne weiteren manuellen Eingriff des Benutzers abläuft.

Dazu ist im Röntgen-Analysegerät eine Greifvorrichtung zur gezielten Entnahme einer beliebigen Probe aus einer der Ablege-Positionen und Zuführung in eine Übergabe- oder Messposition und wieder zurück in die Ablegeposition vorgesehen. Um jede Position auf dem starren, rechteckigen Probentisch anfahren zu können, ist eine relativ komplexe Antriebsmechanik der Greifvorrichtung erforderlich. Der Greifroboter muss dazu sowohl in x- als auch in y-Richtung bewegbar sein. Außerdem ist zur Durchführung des Greifvorgangs mit dem Roboterarm auch ein beträchtlicher Platzbedarf in vertikaler z-Richtung vorhanden.

Insgesamt nimmt allein die Greifvorrichtung zusammen mit dem unbeweglich in der Apparatur befestigten rechteckigen Probentisch einen ganz erheblichen quaderförmigen Raum in drei Dimensionen innerhalb des Röntgen-Analysegerätes in Anspruch. Da das Gerät andererseits als Routineeinrichtung in Räumlichkeiten eingesetzt werden soll, in denen in der Regel das Platzangebot sehr begrenzt ist, wird es oft problematisch, eine gattungsgemäße Anordnung mit den zugehörigen Bedienungselementen bequem an einem typischen Arbeitsplatz unterzubringen.

Aufgabe der Erfindung ist es demgegenüber, ein Röntgen-Analysegerät mit den eingangs genannten Merkmalen vorzustellen, das topologisch möglichst einfach konstruiert ist, und aufgrund einer erheblich kompakteren Aufbauweise bei voller relativer Beweglichkeit der Teile einen wesentlich geringeren Platzbedarf aufweist, wobei die Anfahrbarkeit der Ablege-, Übergabe- und Mess-Positionen gegenüber dem bekannten Gerät nicht eingeschränkt werden soll.

Erfindungsgemäß wird diese Aufgabe auf ebenso überraschend einfache wie wirkungsvolle Art und Weise dadurch gelöst, dass der Probentisch zum Greifen von Proben aus unterschiedlichen Zeilen unabhängig von der Greifvorrichtung parallel zu einer y-Richtung, die unter einem Winkel α zur x-Richtung verläuft, linear bewegbar ist, wobei der Probentisch parallel zur x-y-Ebene angeordnet ist.

Damit gelingt es mit technisch leicht zu realisierenden Mitteln, ein gattungsgemäßes Röntgen-Analysegerät so aufzubauen, dass der zur Verfügung stehende Raum erheblich ökonomischer genutzt bzw. der nutzbare Raum im oberen Bereich der Apparatur erheblich verringert werden kann, ohne dass die Anzahl der im Probentisch anfahrbaren Ablege-Positionen gegenüber herkömmlichen Geräten verringert werden müsste. Dies gelingt dadurch, dass der Greif-Roboter bei der erfindungsgemäßen Apparatur nicht mehr sowohl in x- als auch in y-Richtung, sondern nur noch ausschließlich in x-Richtung bewegt werden muss, während relativ zum Roboter der Probentisch in der y-Richtung linear verfahren werden kann, so dass wiederum jede beliebige Ablege-Position vom Greifer erreicht wird.

Vorzugsweise wird beim erfindungsgemäßen Röntgen-Analysegerät der Winkel α ≈ 90° gewählt. Dadurch wird es ermöglicht, angepasst an die Geometrie üblicher Gehäuse den Platzbedarf für die Greifvorrichtung und den Probentisch zu minimieren.

Ebenfalls bevorzugt ist ein geometrischer Aufbau des erfindungsgemäßen Röntgen-Analysegeräts, bei dem die x-y-Ebene horizontal verläuft. Auf diese Weise kann beim Greifvorgang die Schwerkraft optimal ausgenutzt werden. Außerdem können auch Flüssigkeitsproben ohne Gefahr des Verschüttens leicht verarbeitet werden.

Bei einer besonders vorteilhaften Ausführungsform des erfindungsgemäßen Röntgen-Analysegeräts sind die Ablege-Positionen auf dem Probentisch in Form einer Matrix angeordnet. Auf diese Weise sind die Ablege-Positionen vom Benutzer leicht anwählbar und der Probentisch beim Einlegen der Proben nach einem vom Benutzer vorgesehenen System übersichtlich mit Proben bestückbar. Außerdem kann eine derartige Matrix von der Ansteuer-Software für die automatische Greifvorrichtung besonders einfach adressiert werden.

Um die Bedienung zu erleichtern und bei einem größeren Anfall von zu untersuchenden Proben möglicherweise auch schon weitere Probentische vorab mit Proben bestücken zu können, werden die Probentische in der Regel so aufgebaut sein, dass sie im Röntgenanalysegerät leicht eingeführt und lösbar befestigt werden können. Zu einem bestimmten Gerät können dann auch mehrere Probentische vorhanden sein, von denen dann allerdings immer nur einer im Gerät für die nächste Messserie befestigt wird. Alternativ oder ergänzend dazu kann das erfindungsgemäße Röntgen-Analysegerät auch so ausgestaltet sein, dass die Proben jeweils einzeln über eine Öffnung von außen an eine bestimmte, als Eingabe-Position definierte Stelle des Probentisches eingeführt werden und von dort mittels der Greifvorrichtung auf vom Benutzer vorzubestimmende Ablege-Positionen weiterbefördert werden.

Besonders bevorzugt ist eine Ausführungsform des erfindungsgemäßen Röntgen-Analysegerätes, bei dem die Vorrichtung zum automatischen Wechseln der Proben mit dem Röntgen-Analysegerät in einem gemeinsamen Gehäuse untergebracht ist. Damit lassen sich die oben geschilderten Vorteile eines eingeschränkten Platzbedarfes für die Greifvorrichtung durch die aufgrund der Trennung von x- und y-Bewegung möglich gewordene erheblich kompaktere Anordnung besonders vorteilhaft ausnutzen.

Eine besonders bevorzugte Weiterbildung dieser Ausführungsform ist derart gestaltet, dass sich das gemeinsame Gehäuse bezüglich der y-Richtung nach oben hin in Richtung einer vertikalen z-Achse, die senkrecht zur x-y-Ebene verläuft, verjüngt, und dass im oberen, verjüngten Teil des Gehäuses die Greifvorrichtung angeordnet ist. Dies ist nur mit der erfindungsgemäßen Anordnung zu bewerkstelligen, da hier der Greifroboter lediglich in x-Richtung, nicht aber in y-Richtung verfahrbar ist. Der in y-Richtung eingesparte Platz im oberen Teil des Geräts kann beispielsweise für den Einbau eines Monitors genutzt werden, der ansonsten an einer anderen Stelle im Bedienungsraum wertvollen Platz wegnehmen würde.

Eine weitere besonders bevorzugte Ausführungsform des erfindungsgemäßen Röntgen-Analysegerät zeichnet sich dadurch aus, dass zumindest einige der Proben von einem Probenhalter in Umfangsrichtung umgeben sind, wobei die jeweilige Probe oder ein die Probe enthaltendes Gefäß den Probenhalter in Richtung einer zur x-y-Ebene senkrechten, vertikalen z-Richtung überragt, und dass die Greifvorrichtung probenseitig so ausgebildet ist, dass sie die den Probenhalter überragenden Teile der Probe oder des die Probe enthaltenden Gefäßes in einer Betriebsstellung in z-Richtung umschließen und den Probenhalter ergreifen kann.

Üblicherweise sind bei gattungsgemäßen Röntgen-Analysegeräten die Proben bzw. Probengefäße so dimensioniert, dass sie mit dem oberen Rand des Probenhalters in z-Richtung abschließen, wie beispielsweise in der DE 198 51 501 C1 beschrieben ist. Entsprechend liegt dann die Greifvorrichtung mit ihrer probenseitigen Partie am oberen Rand der Probe und gleichzeitig des Probenhalters beim Greifvorgang an. Mit der obigen Ausführungsform der Erfindung können nunmehr aber auch in z-Richtung ausgedehnte Proben, beispielsweise Flüssigkeitsbehälter leicht verarbeitet werden. Mit dieser Ausgestaltung ist außerdem eine einfachere Be- und Entladung eines Probenhalters mit derartigen in z-Richtung ausgedehnten Proben möglich. Daneben kann ein derartig ausgestaltetes Greifersystem aber auch herkömmliche Proben problemlos greifen, so dass diese Ausführungsform der Erfindung universell bei unterschiedlichsten Arten von Proben einsetzbar ist. Während bisher üblicherweise für in z-Richtung ausgedehntere Proben aufwändige Speziallösungen gefunden werden mussten, kann jetzt mit der obigen Ausführungsform der Erfindung ein ganz einfacher Probenhalter standardisiert und mit sehr geringen Kosten eingesetzt werden.

Bei einer besonders vorteilhaften Weiterbildung dieser Ausführungsform ist vorgesehen, dass der Probenhalter im Anschluss an das bodenseitige Ende der Probe oder eines die Probe enthaltenden Gefäßes einen (oder mehrere) Halteabschnitt(e) aufweist, der (die) in einer zur x-y-Ebene parallelen Ebene die Probe oder das die Probe enthaltende Gefäß unterfasst (unterfassen) und als mechanischer Anschlag in z-Richtung für die Probe oder das die Probe enthaltende Gefäß wirkt (wirken). Damit wird die Beladung des Probenhalters mit der Probe noch weiter vereinfacht, wobei eine definierte Endstellung in z-Richtung erreicht wird.

Üblicherweise umgibt der Probenhalter die Probe auf seiner im Betrieb der Greifvorrichtung zugewandten Seite ringförmig, vorzugsweise kreisringförmig. Die Probe bzw. das die Probe enthaltende Gefäß kann dann entweder in den Probenhalterring eingestellt oder eingepresst werden.

Bei einer Weiterbildung der Erfindung kann aber auch der Probenhalter die Probe auf seiner im Betrieb der Greifvorrichtung zugewandten Seite mit mehreren in z-Richtung verlaufenden, untereinander parallelen Stäben in Umfangsrichtung umgeben. Dadurch wird eine bessere Zentrierung der Probe erreicht, wobei durch die Ausdehnung der Stäbe in z-Richtung auch eine gewisse Flexibilität zum Ausweichen in der x-y-Ebene beim Einführen der Probe möglich ist, so dass einer Beschädigung der Probe durch zu starkes Einpressen in den Probenhalter vorgebeugt wird.

Auf der Gegenseite kann bei Weiterbildungen entsprechend auch die Greifvorrichtung mindestens drei, vorzugsweise gleichmäßig um den Umfang der zu haltenden Probe verteilte, in z-Richtung verlaufende parallele Stäbe aufweisen.

Bei Ausführungsformen der Erfindung kann die Greifvorrichtung mechanisch arbeiten. Ein solcher Greifroboter ist einfach und preiswert in der Herstellung, braucht allerdings in der Regel viel Platz und kann daher nicht sonderlich kompakt konstruiert werden. Insbesondere der seitliche Platzbedarf in der horizontalen x-y-Ebene wird bei einem mechanischen Greifvorgang normalerweise relativ groß sein, so dass die Ablege-Positionen der Proben auf dem Probentisch bei diesen Ausführungsformen entsprechend weit auseinander liegen müssen, damit die Proben im Probenhalter sicher ergriffen werden können, ohne dass benachbarte Proben berührt werden.

Alternativ oder ergänzend kann die Greifvorrichtung aber auch pneumatisch, vorzugsweise durch Ansaugen der Probenhalter mittels Unterdruck arbeiten. Denkbar ist auch eine Kombination mit einem pneumatisch betätigbaren mechanischen Greifer, so dass der pneumatische Greifvorgang durch Ansaugen immer nur an Stellen mit besonders geringem Platzangebot ausgeführt werden muss. Die Pneumatikeinrichtung dient dann für beide Teile des Greifsystems.

Bei einer Weiterbildung dieser Ausführungsform, bei der die Greifvorrichtung entsprechend der oben beschriebenen Ausführungsform probenseitig angeordnete stabförmige Greifelemente aufweist, können zumindest einige der in z-Richtung verlaufenden parallelen Stäbe als Saugrüssel zum Ansaugen von Teilen des Probenhalters ausgebildet sein. Eine solche Anordnung ist in jedem Fall erheblich platzsparender als eine mechanische Greifanordnung, da die parallelen Stäbe nicht in der x-y-Ebene beim Greifvorgang ausweichen müssen, sondern starr von oben in z-Richtung auf den Probenhalter heruntergefahren werden können.

Besonders bevorzugt sind Ausführungen der Erfindung, bei denen die Greifvorrichtung magnetisch arbeitet. Zwar ist eine derartige magnetische Einrichtung in der Regel etwas teurer in der Herstellung als eine mechanische, sie kann aber wesentlich kompakter gestaltet werden.

Meistens wird bei diesen Ausführungsformen die Greifvorrichtung als Elektromagnet ausgebildet sein, der von außen beliebig zum Aktivieren und Deaktivieren des Greifvorgangs mit elektrischen Strömen angesteuert werden kann.

Bei anderen Weiterbildungen dieser Ausführungsform kann aber auch die Greifvorrichtung auf ihrer dem Probenhalter im Betrieb zugewandten Seite permanentmagnetische Abschnitte aufweisen. Eine solche magnetische Greifvorrichtung ist etwas unaufwändiger als ein Elektromagnet, dafür muss allerdings eine Vorrichtung zum mechanischen Verfahren der permanentmagnetischen Abschnitte in z-Richtung zum Abtrennen der ergriffenen Probe beim Ablegen in die jeweilige Zielposition vorgesehen werden.

Bei einer besonders bevorzugten Weiterbildung der Erfindung schließlich ist der Probenhalter auf seiner im Betrieb der Greifvorrichtung zugewandten Seite zumindest teilweise aus magnetisierbarem, vorzugsweise ferromagnetischem Material aufgebaut, so dass er besonders einfach mit Hilfe einer magnetischen Greifvorrichtung angezogen und ergriffen werden kann.

Weitere Vorteile ergeben sich aus den Zeichnungen und der Beschreibung. Ebenso können die vorstehend genannten und die noch weiter aufgeführten Merkmale erfindungsgemäß einzeln für sich und zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Die Erfindung ist in Zeichnungen dargestellt und wird anhand von Ausführungsbeispielen näher erläutert. Es zeigen:
- Fig. 1: eine schematisierte Darstellung der Greifvorrichtung des linear verschiebbaren Probentisches sowie der Messposition in einem erfindungsgemäßen Röntgen-Analysegerät;
- Fig. 2: eine schematische Darstellung des Gehäuses für eine Ausführungsform des erfindungsgemäßen Röntgenanalysegeräts mit eingebautem Monitor;
- Fig. 3: einen schematischen Horizontalschnitt durch eine erfindungsgemäß ausgebildete Greifvorrichtung, die eine Probe umfasst, welche in einem erfindungsgemäß zugerichteten ringförmigen Probenhalter eingepasst ist;
- Fig. 4a: eine Draufsicht von oben auf die Probe mit Probenhalter nach Fig. 3;
- Fig. 4b: eine Draufsicht von oben auf eine Probe mit stabförmigem Probenhalter und ringförmigem Halteabschnitt; und
- Fig. 5: einen schematischen Vertikalschnitt durch eine Greifvorrichtung mit Probe und Probenring nach dem Stand der Technik.

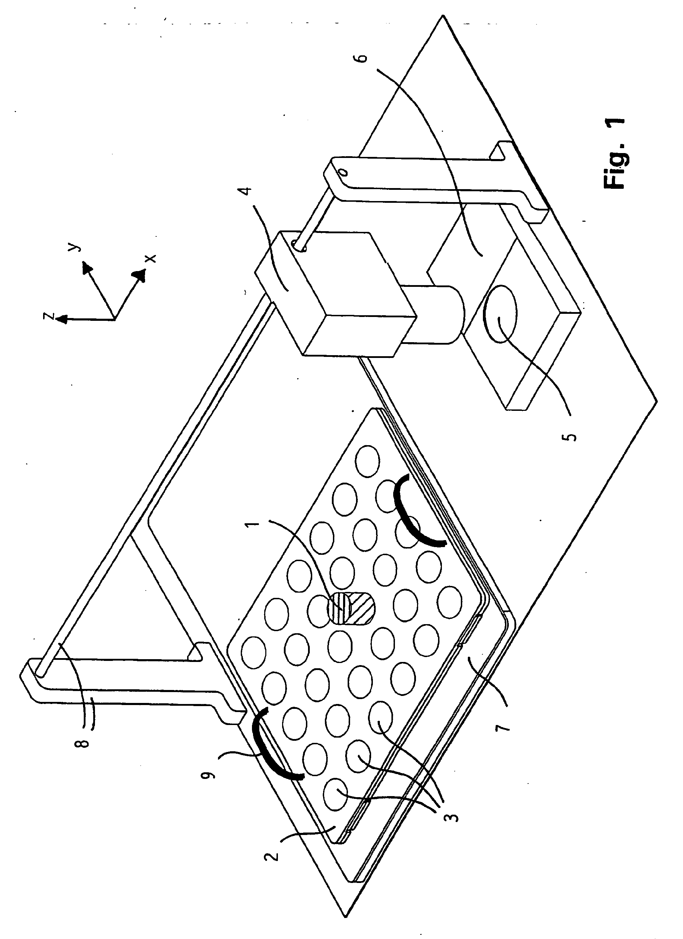

In Fig. 1 ist schematisiert ein Teil der "Innereien" eines erfindungsgemäßen Röntgen-Analysegerätes dargestellt. Repräsentativ für eine Vielzahl von zu untersuchenden Proben ist lediglich eine einzige Probe 1 auf einem Probentisch 2 eingezeichnet. Der Probentisch 2 enthält matrixförmig in m-Zeilen angeordnete Ablege-Positionen 3, von denen jede mit einer Probe bestückt werden kann.

Zur gezielten Entnahme einer beliebigen Probe 1 aus einer Ablege-Position 3 im Probentisch 2 ist eine Greifvorrichtung 4 vorgesehen, mit der die entnommene Probe 1 einer Mess-Position 5 zugeführt werden kann. Um die Umwelt im Betrieb vor Röntgenstrahlung zu schützen, kann die Mess-Position 5 mit einem strahlungsabschirmenden Schieber 6 während der Messung abgedeckt werden.

Damit die Greifvorrichtung 4 jede einzelne der Ablege-Positionen 3 im Probentisch 2 erreichen kann, ist die Greifvorrichtung 4 in x-Richtung längs einer der m Zeilen an einem Gestänge 8 verschiebbar. Rechtwinklig dazu in y-Richtung kann der Probentisch 2 auf einer Schienenplatte 7 linear verfahren werden. Der Probentisch 2 ist abnehmbar auf der Schienenplatte 7 gelagert, so dass die Proben 1 auch per Hand von außerhalb des erfindungsgemäßen Röntgen-Analysegerätes in die Ablege-Positionen 3 eingelegt werden können. Zum Herausnehmen des Probentisches 2 aus der Apparatur sind im gezeigten Ausführungsbeispiel zwei Griffe 9 vorgesehen.

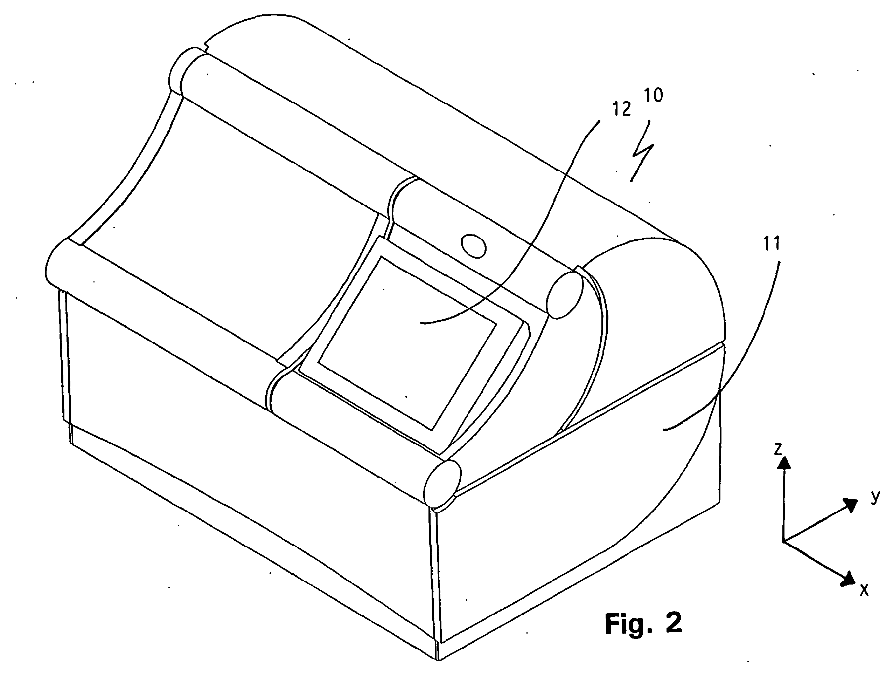

In Fig. 2 ist ein erfindungsgemäßes Röntgen-Analysegerät 10 dargestellt, das die in Fig. 1 gezeigten Teile im Inneren seines Gehäuses 11 enthält. Aufgrund der Trennung zwischen der x-Verschiebung der Greifvorrichtung 4 und der y-Verschiebung des Probentisches 2 relativ dazu konnte das Gehäuse 11 so gestaltet werden, dass es bezüglich der y-Richtung nach oben hin in Richtung der vertikalen z-Achse verjüngt ist, da die Greifvorrichtung 4 sich erfindungsgemäß nur noch in x-Richtung, nicht aber in y-Richtung bewegen muss. Im gezeigten Ausführungsbeispiel wurde der eingesparte Platz zum Einbau eines Monitors 12 für das erfindungsgemäße Röntgen-Analysegerät 10 genutzt.

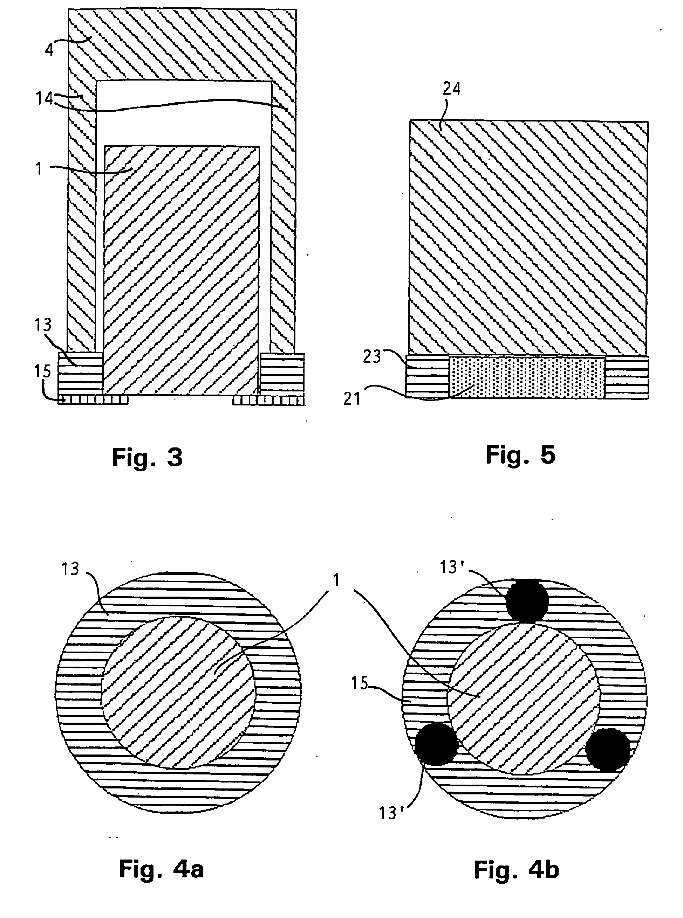

In Fig. 3 ist sehr schematisch ein Vertikalschnitt durch eine Greifvorrichtung 4 gezeigt, die mittels Stäben 14 eine in z-Richtung weiter als üblich ausgedehnte Probe 1 seitlich umgreift und gegen einen Probenhalter 13 gefahren ist, der die Probe 1 ringförmig umgibt. Der Probenhalter 13 ist bodenseitig mit einem ringförmigen Halteabschnitt 15 verbunden, welcher die Probe 1 unterfasst und als mechanischer Anschlag für die Probe 1 in z-Richtung wirkt.

Zum Ergreifen des Probenhalters 13 mit der darin eingepassten Probe 1 können die Stäbe 14 der Greifvorrichtung 4 als Magnete ausgebildet sein, wobei dann der Probenhalter 13 aus magnetisierbarem, vorzugsweise permanentmagnetischem Material ausgebildet sein muss. Der Greifer 4 kann dabei als Elektromagnet oder als Permanentmagnet aufgebaut sein.

Alternativ können die Stäbe 14 der Greifvorrichtung 4 aber auch als Saugrüssel zum Ansaugen von Teilen des Probenhalter 13, der die Probe 1, wie in Fig. 4a gezeigt, ringförmig umgibt, ausgebildet sein.

Anstelle von Stäben 14 kann die Greifvorrichtung 4 aber auch probenseitig ein röhrenförmiges Ende aufweisen, welches einen lichten Innendurchmesser besitzen muss, der größer als der Außendurchmesser der die Haltevorrichtung 13 in z-Richtung überragenden Teile der Probe 1 sein muss. Dann kann die Greifvorrichtung 4 mit diesem röhrenförmigen Ende ebenfalls in z-Richtung über die Probe 1 geschoben werden und den Probenhalter 13 ergreifen.

Alternativ zu dem in Fig. 4a gezeigten Probenhalter 13 kann, wie in Fig. 4b dargestellt ist, ein Probenhalter 13' vorgesehen sein, welcher untereinander parallele Stäbe enthält, die sich in z-Richtung erstrecken, und zwischen die die Probe 1 eingepasst ist. Wie in dem Ausführungsbeispiel von Fig. 4b gezeigt, können die parallelen Stäbe des Probenhalters 13' bodenseitig fest mit einem ringförmigen Halteabschnitt 15 verbunden sein, welcher, wie in Fig. 3 dargestellt, die Probe 1 bodenseitig unterfasst.

Statt magnetisch oder pneumatisch kann die Greifvorrichtung 4 in Ausführungsformen, welche in der Zeichnung nicht dargestellt sind, mechanisch arbeiten. Der geometrische Aufbau der probenseitigen Teile der Greifvorrichtung 4 würde aber ähnlich wie bei den gezeigten Ausführungsbeispielen gestaltet sein.

In Fig. 5 schließlich ist zum Vergleich schematisiert eine Greifvorrichtung 24 nach dem Stand der Technik gezeigt, die einen Probenring 23 mit einer darin eingepassten Probe 21 (ebenfalls nach dem Stand der Technik) ergreift. Im Gegensatz zu dem in Fig. 3 gezeigten Ausführungsbeispiel schließt die Probe 21 in Fig. 5 in z-Richtung mit dem Probenring 23 eben ab. Daher muss das probenseitige Ende der Greifvorrichtung 24 auch keine Ausgestaltung aufweisen, die es erlauben würde, überragende Teile der Probe seitlich zu umfassen.

## Patentansprüche

1. Röntgen-Analysegerät zur Untersuchung von Material-Proben, mit einer Vorrichtung zum automatischen Wechseln der Proben (1), die einen Probentisch (2) mit in m Zeilen angeordneten Ablege-Positionen (3) enthält, wobei die Zeilen parallel zu einer x-Richtung verlaufen und m ≥ 2, und mit einer Greifvorrichtung (4) zur gezielten Entnahme einer beliebigen Probe (1) aus einer Ablege-Position (3) und Zuführung in eine Übergabe- und/oder Mess-Position (5) sowie zurück auf eine Ablege-Position (3), wobei der Probentisch (2) parallel zur x-y-Ebene angeordnet ist,
**dadurch gekennzeichnet,**
**dass** die Greifvorrichtung (4) ausschließlich parallel zur x-Richtung linear verfahrbar ist, und dass der Probentisch (2) zum Greifen von Proben (1) aus unterschiedlichen Zeilen unabhängig von der Greifvorrichtung (4) parallel zu einer y-Richtung, die unter einem Winkel α zur x-Richtung verläuft, linear bewegbar ist, und dass die Vorrichtung zum automatischen Wechseln der Proben (1) mit dem Röntgen-Analysegerät (10) in einem gemeinsamen Gehäuse (11) untergebracht ist, wobei sich das gemeinsame Gehäuse (11) bezüglich der y-Richtung nach oben hin in Richtung einer vertikalen z-Achse, die senkrecht zur x-y-Ebene verläuft, verjüngt, und dass im oberen, verjüngten Teil des Gehäuses (11) die Greifvorrichtung (4) angeordnet ist.

2. Röntgen-Analysegerät nach Anspruch 1, **dadurch gekennzeichnet, dass** der Winkel α ≈ 90°.

3. Röntgen-Analysegerät nach einem der vorhergehenden Ansprüche, **dadurch gekennzeichnet, dass** die x-y-Ebene horizontal verläuft.

4. Röntgen-Analysegerät nach einem der vorhergehenden Ansprüche, **dadurch gekennzeichnet, dass** die Ablegeposition auf dem Probentisch (2) in Form einer Matrix angeordnet ist.

5. Röntgen-Analysegerät nach einem der vorhergehenden Ansprüche, **dadurch gekennzeichnet, dass** zumindest einige der Proben (1) von einem Probenhalter (13;13') in Umfangsrichtung umgeben sind, wobei die Probe (1) oder ein die Probe (1) enthaltendes Gefäß den Probenhalter (13;13') in Richtung einer zur x-y-Ebene senkrechten, vertikalen z-Richtung überragt, und dass die Greifvorrichtung (4) probenseitig so ausgebildet ist, dass sie die den Probenhalter (13;13') überragenden Teile der Probe (1) oder des die Probe (1) enthaltenden Gefäßes in einer Betriebsstellung in z-Richtung umschließen und den Probenhalter (13; 13') ergreifen kann.

6. Röntgen-Analysegerät nach Anspruch 5, **dadurch gekennzeichnet, dass** der Probenhalter (13;13') im Anschluss an das bodenseitige Ende der Probe (1) oder eines die Probe (1) enthaltenden Gefäßes einen (oder mehrere) Halteabschnitt(e) (15) aufweist, der (die) in einer zur x-y-Ebene parallelen Ebene die Probe (1) oder das die Probe (1) enthaltende Gefäß unterfasst (unterfassen) und als mechanischer Anschlag in z-Richtung für die Probe (1) oder das die Probe (1) enthaltende Gefäß wirkt (wirken).

7. Röntgen-Analysegerät nach Anspruch 5 oder 6, **dadurch gekennzeichnet, dass** der Probenhalter (13) die Probe (1) auf seiner im Betrieb der Greifvorrichtung (4) zugewandten Seite ringförmig, vorzugsweise kreisringförmig umgibt.

8. Röntgen-Analysegerät nach Anspruch 6 oder 7, **dadurch gekennzeichnet, dass** der Probenhalter (13') die Probe (1) auf seiner im Betrieb der Greifvorrichtung (4) zugewandten Seite mit mehreren in z-Richtung verlaufenden, untereinander parallelen Stäben in Umfangsrichtung umgibt.

9. Röntgen-Analysegerät nach Anspruch 8, **dadurch gekennzeichnet, dass** die Greifvorrichtung (4) mindestens drei, vorzugsweise gleichmäßig um den Umfang der zu haltenden Probe (1) verteilte, in z-Richtung verlaufende parallele Stäbe (14) aufweist.

10. Röntgen-Analysegerät nach einem der Ansprüche 8 oder 9, **dadurch gekennzeichnet, dass** zumindest einige der in z-Richtung verlaufenden parallelen Stäbe (14) als Saugrüssel zum Ansaugen von Teilen des Probenhalters (13) ausgebildet sind.

11. Röntgen-Analysegerät nach einem der Ansprüche 5 bis 9, **dadurch gekennzeichnet, dass** der Probenhalter (13;13') auf seiner im Betrieb der Greifvorrichtung (4) zugewandten Seite zumindest teilweise aus magnetisierbarem, vorzugsweise ferromagnetischem Material aufgebaut ist.

## Claims

1. X-ray analysis apparatus for investigating material samples comprising a device for automatic exchange of the samples (1) which contains a sample table (2) with depositing positions (3) disposed in m lines, wherein the lines extend parallel to an x direction and m ≥ 2, and comprising a gripping device (4) for precise removal of any desired sample (1) from a depositing position (3) and for transfer thereof into a transfer and/or measuring position (5) and back to a depositing position (3), wherein the sample table (2) is disposed parallel to the x-y plane,
**characterized in that**
the gripping device (4) can be displaced linearly, solely parallel to the x direction, and that the sample table (2) for gripping samples (1) from different lines independently of the gripping device (4) can be moved linearly parallel to a y direction extending at an angle α to the x direction and that the device for automatic exchange of the samples (1) is accommodated in a common housing (11) together with the X-ray analysis apparatus (10), wherein the common housing (11) with respect to said y direction tapers towards a top in a direction of a vertical z axis extending perpendicular to said x-y plane, and that said gripping device (4) is disposed in the upper, tapering part of said housing (11).

2. X-ray analysis apparatus according to claim 1, **characterized in that** the angle α ≈ 90°.

3. X-ray analysis apparatus according to any one of the preceding claims, **characterized in that** the x-y plane extends horizontally.

4. X-ray analysis apparatus according to any one of the preceding claims, **characterized in that** the depositing position is disposed on the sample table (2) in the form of a matrix.

5. X-ray analysis apparatus according to any one of the preceding claims, **characterized in that** at least some of the samples (1) are surrounded by a sample holder (13; 13') in the peripheral direction, wherein the sample (1) or a sample (1) container projects past the sample holder (13; 13') in the direction of a vertical z direction perpendicular to the x-y plane, and that the gripping device (4) is structured and disposed on a side of the sample so as to surround parts of the sample (1) or of the sample (1) container which project past the sample holder (13; 13') in an operating position in the z direction and to grip the sample holder (13; 13').

6. X-ray analysis apparatus of claim 5, **characterized in that** the sample holder (13; 13') comprises one (or multiple) holding section(s) (15) disposed adjacent to the bottom-sided end of the sample (1) or of a sample (1) container to engage below the sample (1) or the sample (1) container in a plane parallel to the x-y plane for acting as a mechanical stop in the z direction for the sample (1) or the sample (1) container.

7. X-ray analysis apparatus according to claim 5 or 6, **characterized in that** the sample holder (13) surrounds the sample (1) on its side facing the gripping device (4) during operation in an annular, preferably circular fashion.

8. X-ray analysis apparatus according to claim 6 or 7, **characterized in that** the sample holder (13') surrounds the sample (1), on its side facing the gripping device (4) during operation, in the peripheral direction with several parallel rods extending in the z direction.

9. X-ray analysis apparatus according to claim 8, **characterized in that** the gripping device (4) comprises at least three parallel rods (14) which are preferably evenly distributed about the periphery of the sample (1) to be held and which extend in the z direction.

10. X-ray analysis apparatus according to claim 8 or 9, **characterized in that** at least some of the parallel rods (14) which extend in the z direction are constructed as a suction nozzle for suctioning parts of the sample holder (13).

11. X-ray analysis apparatus according to any one of the claims 5 through 9, **characterized in that** the side of the sample holder (13; 13') facing the gripping device (4) during operation, is formed at least partially of magnetizable, preferably ferromagnetic material.

## Revendications

1. Appareil d'analyse à rayons X destiné à l'examen d'échantillons de matière, avec un dispositif de changement automatique des échantillons (1) qui contient un plateau à échantillons (2) présentant des positions de réception (3) disposées en m rangées, les rangées s'étendant parallèlement à une direction x et m ≥ 2, et avec un dispositif de préhension (4) pour prélever de manière ciblée un échantillon (1) quelconque d'une position de réception (3) et l'amener à une position de transfert et/ou de mesure (5) ainsi que le ramener à une position de réception (3), le plateau à échantillons (2) étant disposé parallèlement au plan x-y,
**caractérisé en ce**
**que** le dispositif de préhension (4) est déplaçable linéairement exclusivement parallèlement à la direction x, et que, pour permettre la préhension d'échantillons (1) depuis des rangées différentes, le plateau à échantillons (2) est déplaçable linéairement indépendamment du dispositif de préhension (4) parallèlement à une direction y qui fait un angle α avec la direction x, et que le dispositif de changement automatique des échantillons (1) est logé avec l'appareil d'analyse à rayons X (10) dans un boîtier commun (11), le boîtier commun (11) s'amincissant par rapport à la direction y vers le haut dans la direction d'un axe vertical z qui est perpendiculaire au plan x-y, et que le dispositif de préhension (4) est disposé dans la partie supérieure, amincie, du boîtier (11).

2. Appareil d'analyse à rayons X selon la revendication 1, **caractérisé en ce que** l'angle α ≈ 90°.

3. Appareil d'analyse à rayons X selon une des revendications précédentes, **caractérisé en ce que** le plan x-y-s'étend horizontalement.

4. Appareil d'analyse à rayons X selon une des revendications précédentes, **caractérisé en ce que** la position de réception sur le plateau à échantillons (2) est disposée sous la forme d'une matrice.

5. Appareil d'analyse à rayons X selon une des revendications précédentes, **caractérisé en ce qu'**au moins quelques-uns des échantillons (1) sont entourés en direction circonférentielle par un porte-échantillon (13 ; 13'), l'échantillon (1) ou un récipient contenant l'échantillon (1) dépassant du porte-échantillon (13 ; 13') dans une direction verticale z perpendiculaire au plan x-y, et que le dispositif de préhension (4) est conformé côté échantillon de façon qu'il puisse entourer en direction z les parties de l'échantillon (1) ou du récipient contenant l'échantillon (1) qui dépassent du porte-échantillon (13 ; 13') dans une position de fonctionnement et saisir le porte-échantillon (13 ; 13').

6. Appareil d'analyse à rayons X selon la revendication 5, **caractérisé en ce que** le porte-échantillon (13 ; 13') présente à la suite de l'extrémité côté fond de l'échantillon (1) ou d'un récipient contenant l'échantillon (1) une (ou plusieurs) portion(s) de maintien (15) qui soutient (soutiennent) l'échantillon (1) ou un récipient contenant l'échantillon (1) dans un plan parallèle au plan x-y et agit (agissent) comme butée mécanique en direction z pour l'échantillon (1) ou un récipient contenant l'échantillon (1).

7. Appareil d'analyse à rayons X selon la revendication 5 ou 6, **caractérisé en ce que** le porte-échantillon (13) entoure à la manière d'un anneau, de préférence d'un anneau de cercle, l'échantillon (1) de son côté tourné en fonctionnement vers le dispositif de préhension (4).

8. Appareil d'analyse à rayons X selon la revendication 6 ou 7, **caractérisé en ce que** le porte-échantillon (13') entoure en direction circonférentielle l' échantillon (1) de son côté tourné en fonctionnement vers le dispositif de préhension (4) par plusieurs barres parallèles entre elles s'étendant en direction z.

9. Appareil d'analyse à rayons X selon la revendication 8, **caractérisé en ce que** le dispositif de préhension (4) présente au moins trois barres parallèles (14) s'étendant en direction z, de préférence réparties régulièrement sur la circonférence de l'échantillon (1) à maintenir.

10. Appareil d'analyse à rayons X selon une des revendications 8 ou 9, **caractérisé en ce qu'**au moins quelques-unes des barres parallèles (14) s'étendant en direction z sont réalisées sous la forme de suçoirs pour aspirer des parties du porte-échantillon (13).

11. Appareil d'analyse à rayons X selon une des revendications 5 à 9, **caractérisé en ce que** le porte-échantillon (13 ; 13') est constitué au moins partiellement d'un matériau magnétisable, de préférence ferromagnétique, de son côté tourné en fonctionnement vers le dispositif de préhension (4).
